# EUROPEAN PATENT SPECIFICATION

(11) **EP 4 605 807 B1**
(45) Date of publication and mention of the grant of the patent: **02.12.2026**
(21) Application number: 22818933.8
(22) Date of filing: 19.10.2022
(51) Int. Cl.: G05D 16/02, G05D 16/10, F16J 15/32

(54) **PRESSURE-REDUCING VALVE**
DRUCKMINDERVENTIL
VANNE DE RÉDUCTION DE PRESSION

(43) Date of publication of application: 27.08.2025
(73) Proprietor: Aerojet Rocketdyne, Inc., Melbourne, FL 32919 (US)
(72) Inventor: TOLENTINO, Arturo, Sacramento, California 95813-6000 (US); HOOVER, Charles, Sacramento, California 95813-6000 (US)
(74) Representative: Dehns
(86) International application number: PCT/US2022/047092
(87) International publication number: WO 2024/085867

(56) References cited:
- EP-A2- 1 562 096
- CN-U- 215 522 118
- DE-B4- 112005 003 291
- US-B2- 9 810 327

## Description

### BACKGROUND

Pressure-reducing valves ("PRVs") are designed to reduce the pressure of an input fluid to a level that is desired in downstream components that use the fluid. PRVs contain a poppet that is moveable with respect to a valve seat to modulate flow past the poppet. There is a pressure feedback across the poppet that, in combination with a spring, controls poppet movement and thus the size of the valve opening for fluid flow. For instance, a relatively high pressure at the outlet of the PRV feeds back to urge the poppet toward a more closed position that reduces flow and thus pressure. A relatively low pressure at the outlet of the PRV permits the poppet to move toward a more open position and that increases flow and thus pressure. In this manner, the PRV is self-regulating with pressure variations at the outlet.

CN 215,522,118 U discloses a pressure reducing valve.

US 9,810,327 B2 discloses a pressure reducing valve.

DE 11 2005 003291 B4 discloses a pressure reducer.

EP 1,562,096 A2 discloses a pressure reduction valve.

### SUMMARY

A pressure-reducing valve according to an aspect of the present invention is provided in accordance with claim 1.

In a further embodiment of any of the foregoing embodiments, the poppet is pressure-actuated.

In a further embodiment of any of the foregoing embodiments, the non-slip seal is an elastomer o-ring.

In a further embodiment of any of the foregoing embodiments, the stroke distance is from one to three mils (thousandths of an inch) (25.4 micrometers to 76.2 micrometers).

In a further embodiment of any of the foregoing embodiments, the head has a head diameter, and a chamber diameter of the chamber at the non-slip seal is greater than the head diameter.

In a further embodiment of any of the foregoing embodiments, the non-slip seal is an elastomer o-ring.

In a further embodiment of any of the foregoing embodiments, the stroke distance is from one to three mils (thousandths of an inch) (25.4 micrometers to 76.2 micrometers).

In a further embodiment of any of the foregoing embodiments, the first spring is a Belleville spring and the second spring is a coil spring.

In a further embodiment of any of the foregoing embodiments, the stroke distance is from one to three mils (thousandths of an inch) (25.4 micrometers to 76.2 micrometers).

In a further embodiment of any of the foregoing embodiments, the non-slip seal is non-slip along the valve body in the chamber over the stroke distance, thereby avoiding step shifts in pressure due to slipping.

A further embodiment of any of the foregoing embodiments includes an additional non-slip seal on the piston.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example of a pressure-reducing valve.
Figure 2 illustrates a non-slip seal in elastic deformation.

In this disclosure, like reference numerals designate like elements where appropriate and reference numerals with the addition of one-hundred or multiples thereof designate modified elements that are understood to incorporate the same features and benefits of the corresponding elements.

### DETAILED DESCRIPTION

Disclosed herein is a pressure-reducing valve ("PRV"). The examples herein are not limited to the particular design that is shown and described. As will be apparent from the examples, the disclosed PRV facilitates improvements in performance. For example, the poppet of a PRV continually adjusts such that the outgoing pressure is substantially constant. There is, however, variation in the outgoing pressure. One measure of the variation can be represented by a ratio of incoming pressure to outgoing flow. Due to component tolerances, play between the components, and other design factors, this ratio often varies over the pressure range in which the PRV operates. In particular, in high-performance applications and other end uses such variations may debit performance of the system or necessitate more robust designs to accommodate variations. As will be apparent from the examples herein, the disclosed PRV facilitates reduced variation and improvement in performance.

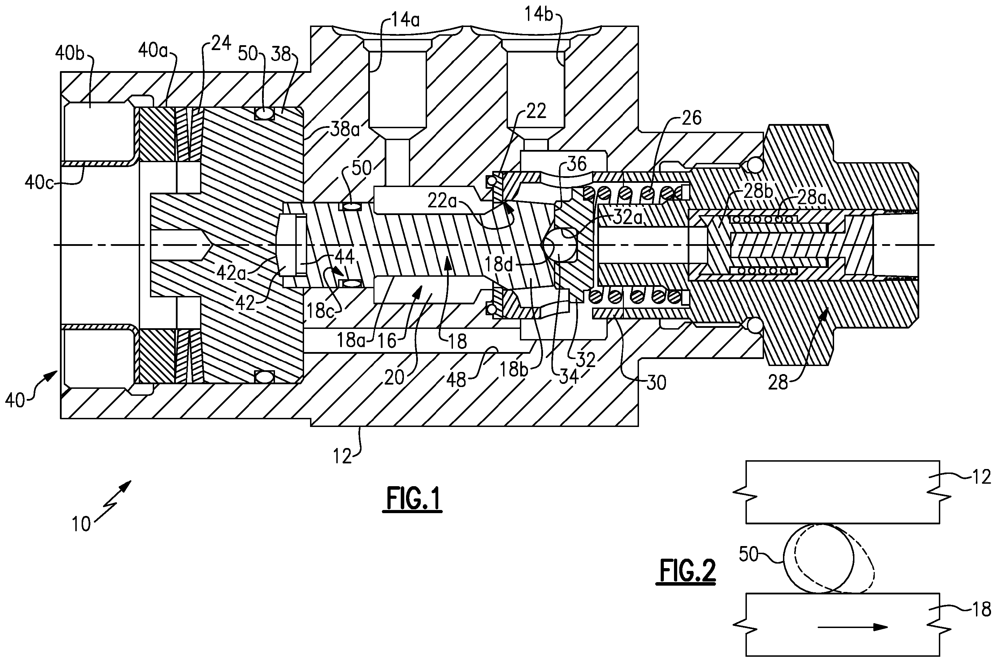

Figure 1 illustrates a sectioned view through the central axis of an example of a pressure-reducing valve 10 ("PRV 10"), which may also be referred to as pressure regulator. In general, the PRV 10 serves to reduce pressure of a fluid (liquid or gas) by using pressure feedback. For instance, the PRV 10 may receive incoming fluid at a high pressure and reduce the fluid to a lower, substantially constant outgoing pressure. As an example, the PRV 10 may be used in a rocket engine to reduce the pressure of a gas from a high-pressure gas source to a downstream rocket engine component.

The PRV 10 includes a valve body 12 that defines an inlet 14a, an outlet 14b, and a chamber 16 that connects the inlet 14a and the outlet 14b. The inlet 14a, the chamber 16, and the outlet 14b together define a flow path through the PRV 10. In practice, a fluid source, such as a high-pressure gas source, will be connected to the inlet 14a, and the outlet 14b will be connected to the downstream component to receive the outgoing flow from the PRV 10. The valve body 12 is formed of a metallic alloy that is suited in strength, chemical resistance, or other characteristics for the end use environment of the PRV 10. As an example, the valve body 12 is formed from a titanium-based alloy or an aluminum based alloy, but is not limited thereto.

There is a poppet 18 disposed in the chamber 16. In general, the poppet 18 has a shank end 18a, a head end 18b, and a gland 18c disposed circumferentially near the shank end 18a. The relatively narrow portion of the shank 18a defines a manifold 20 in the chamber 16 for receiving incoming fluid from the inlet 14a.

The poppet head 18b is adjacent to a valve seat 22 that has a gap 22a through which the poppet 18 extends. The poppet head 18b is larger in diameter than the gap 22a and is moveable such that this gap between the head 18b and valve seat 22 changes as the poppet 18 moves to thereby modulate flow through the flow path. The poppet 18 is moveable over an infinite number of positions between a fully closed position against the valve seat 22 and a maximum open position to which the poppet 18 is permitted to travel in the valve body 12. The amount of movement of the head 18b from the fully closed position to the maximum open position is the stroke distance. In one example, the stroke distance of the poppet 18 is from about 1 mil to about 5 mils (25.4 micrometers to 127 micrometers) , such as from 1 mil to 3 mils (25.4 micrometers to 76.2 micrometers) or about 2 mils (50.8 micrometers).

There is a first spring 24 adjacent one end of the poppet 18 and a second spring 26 at the other end adjacent to the head 18b of the poppet 18. The first spring 24 is stronger than the second spring 26 and biases the poppet 18 against the second spring 26 to an open position by default. In the example shown, the second spring 26 is a coil spring that is at least partially housed in a relief valve 28 that is connected to the valve body 12. The relief valve 28 includes a relief valve spring 28a and valve member 28b. The relief valve member 28b is in a closed position by default and is operable to open at a threshold pressure to reduce pressure in the PRV 10.

A retainer 30 is arranged around the head 18b of the poppet 18. The retainer 30 houses a floating guide 32 and ball 34 (e.g., tungsten carbide). The second spring 26 engages a flange on the floating guide 32. On the opposite side of the floating guide 32 from the spring 26 the floating guide 32 includes a pocket 32a. The ball 34 is partially disposed in the pocket 32a. The end of the poppet 18 at the head 18b includes a conical seat 18d, and the ball 34 bears against the conical seat 18d. The conical seat 18d, ball 34, and pocket 32a form a ball joint through which the force of the spring 26 is applied to the poppet 18. There is a small gap 36 between the head 18b and sides of the floating guide 32 that flank the pocket 32a such that that poppet 18 can pivot on the ball 34. The pivoting permits the force from the spring 26 to be centered on the poppet 18 even if the poppet 18 tilts slightly during operation.

At the other end of the poppet 18, the first spring 24 is located between a piston 38 and hardware 40. For example, the hardware 40 may include a spacer 40a, a screw adjustment 40b, and a lock cup 40c. The spacer 40a aids in transferring the initial force from the screw adjustment 40b to the first spring 24 during assembly of the PRV 10, and thus the initial default open position of the poppet 18. The screw adjustment 40b permits further fine-tuning of the load of the first spring 24 at the operating position of the poppet 18, and the lock cup 40c secures the spacer 40a and the screw adjustment 40b in place once the poppet position is set.

The first spring 24 includes one or more Belleville springs that first spring actually loads the poppet through the piston 38, bearing 42 and spacer 44 urge the piston 38 toward the poppet 18 and against the spring force of the second spring 26. The piston 38 engages the poppet 18 via a bearing 42 that has a convex curved surface 42a that the piston 38 bears against. A shim 44 may be used between the bearing 42 and the poppet 18 for further adjustment of the initial default position of the poppet 18. The first spring 24 loads the poppet 18 through the piston 38, the bearing 42 and the spacer 44. The convex curved surface 42a avoids use of a flat-on-flat interface between the piston 38 and the bearing 42. If the poppet 18 were to tilt during operation, a flat-on-flat interface would cause off-centered force distribution on the poppet 18. In contrast, the convex curved surface 42a keeps the force centered on the poppet 18 even if the poppet 18 tilts slightly during use.

The piston 38 defines a plenum 38a near the end of the poppet 18. In the valve body 12 there is a pressure tap 48 that connects the plenum 38a with the outlet 14b. The pressure tap 48 serves to provide pressure feedback to the piston 38 from the outlet 14b. The pressure in the plenum 38a acts on the piston 38 against the first spring 24 to thereby regulate movement of the poppet 18.

There are non-slip seals 50 on the gland 18c of the poppet 18 and on the piston 38. The non-slip seals 50 seal against the inside surface of the valve body 12 to facilitate pneumatic and/or hydraulic sealing of the valve body 12 to prevent escape of the fluid. For example, the non-slip seals 50 are elastomer o-rings or "slipper" seals that have a retainer ring (i.e., slipper) and a seal disposed in the retainer ring. In further examples, the non-slip seals 50 are elastomer o-rings made of, but are not limited to, EPDM, HNBR, or silicone.

The non-slip seals 50 facilitate reduction in variation of valve performance. For instance, in a comparison PRV the poppet head is relatively small and may thus require a relatively large stroke to achieve a desired amount of flow. Over such a long stroke, at a threshold stroke distance the force experienced by the seal exceeds the static friction force between the seal and the mating surface. Once static friction is overcome, the seal slips along the mating surface. The slip causes a rapid change in the poppet position, i.e., a step shift. The step shift results in a concomitant step shift in flow/pressure and may cause transient variations of 10% or more in the flow and/or pressure.

In the PRV 10, however, the head 18b is relatively large in diameter. Therefore, a shorter stroke can be used to achieve the same flow as in the comparison PRV (i.e., the flow area is proportional to the product of the diameter of the head and the stroke). In the PRV 10, the stroke distance is less than the threshold stroke distance at which the non-slip seals 50 slip. Thus, the non-slip seals 50 may roll but operate substantially within a non-slip state. In that state, the non-slip seals 50 experience elastic deformation upon movement of the poppet 18 over the stroke distance. This is shown in a representative example in Figure 2 in which the non-slip seal 50 is initially substantially circular. Upon movement of the poppet 18, the non-slip seal 50 elastically deforms (e.g. via torsional deformation), as represented by the superimposed deformed seal in dashed lines, but does not slip. The non-slip seal 50 on the piston 38 behaves similarly and elastically deforms without slipping.

The elastic deformations of the non-slip seals 50 act, in essence, as additional springs in the PRV 10, as the deformed non-slip seals 60 tend to elastically recover to their non-deformed states against the movement of the poppet 18 and piston 38. The spring rates of the non-slip seals 50 are predictable from the elastic properties of the non-slip seals 50 and are considered in determination of the net spring rate of the PRV 10. That is, the net spring rate is a function of the spring rate of the first spring 24, the second spring 26, and the spring rates of the non-slip seals 50. Notably, the calculation of spring rate for opposed springs is well-known and may thus be determined for the PRV 10 by those of ordinary skill in the art who have the benefit of this disclosure. The position and control of the poppet 18 can thus be tightly controlled by taking the spring rates of the non-slip seals 50 into account. Moreover, as there is substantially no slip, step shifts in outlet pressure may be reduced or avoided, thereby enhancing valve performance.

In one example that may be useful for implementation of the PRV 10 in a rocket engine, the stroke distance of the poppet 18 is approximately 1 mil to 3 mils (25.4 micrometers to 76.2 micrometers), and a ratio the diameter D of the head 18b of the poppet 18 to the stroke distance is 625:1 to 200:1. In a further example, the spring rate of each one of the non-slip seals 50 is substantially less than the spring rate of the first spring 24, such as 1:10 or less.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A pressure-reducing valve (10) comprising:
a valve body (12) defining an inlet (14a), an outlet (14b), a chamber (16), and a flow path from the inlet (14a) to the outlet (14b) through the chamber (16); and
a poppet (18) and valve seat (22) disposed in the chamber (16), the poppet (18) being moveable over a stroke distance with respect to the valve seat (22) between open and closed positions for flow through the flow path, and the poppet (18) being in the open position by default, wherein the poppet (18) has a head end (18b) and a shank end (18a), wherein the poppet (18) has a gland (18c) disposed circumferentially near the shank end (18a),
**characterised in that**:
the pressure-reducing valve comprises a non-slip seal (50) disposed between the gland (18c) and the valve body (12) in the chamber (16), the non-slip seal (50) sealing the poppet (18) against the valve body (12) in the chamber (16), the non-slip seal (50) experiencing elastic deformation upon movement of the poppet (18) over the stroke distance, the elastic deformation providing elastic potential energy that acts to bias the poppet (18) against the movement; and **in that**
the poppet (18) has a head (18b) with a diameter D, and a ratio of diameter D to the stroke distance is 625:1 to 200:1.

2. The pressure-reducing valve (10) as recited in claim 1, wherein the poppet (18) is pressure-actuated.

3. The pressure-reducing valve (10) as recited in claim 1 or 2, wherein the non-slip seal (50) is an elastomer O-ring.

4. The pressure-reducing valve (10) as recited in any preceding claim, wherein the stroke distance is from one to three mils, i.e. thousandths of an inch, which equals 25.4 micrometers to 76.2 micrometers.

5. The pressure-reducing valve (10) as recited in any preceding claim, further comprising:
a first spring (24) and an opposed second spring (26), the first spring (24) biasing the poppet (18) against the second spring (26) to the open position by default;
a piston (38) adjacent the first spring (24), the first spring (24) acting on the piston (38) to move the poppet (18), the piston (38) defining a plenum (38a); and
a pressure tap (48) connecting the outlet (14b) to the plenum (38a), wherein pressure in the outlet (14b) serves as feedback to the piston (38) through the pressure tap (48), the pressure acting on the piston (38) against the first spring (24) to thereby regulate movement of the poppet (18),
wherein the head (18b) bears against the valve seat (22) when in the closed position.

6. The pressure-reducing valve (10) as recited in claim 5, wherein a chamber diameter of the chamber (16) at the non-slip seal (50) is greater than the head diameter D.

7. The pressure-reducing valve (10) as recited in claim 5 or 6, wherein the first spring (24) is a Belleville spring (24) and the second spring (26) is a coil spring (26).

8. The pressure-reducing valve (10) as recited in any of claims 5 to 7, wherein the non-slip seal (50) is non-slip along the valve body (12) in the chamber (16) over the stroke distance, thereby avoiding step shifts in pressure due to slipping.

9. The pressure-reducing valve (10) as recited in any of claims 5 to 8, further comprising an additional non-slip seal (50) on the piston (38).

## Patentansprüche

1. Druckminderventil (10), umfassend:
ein Ventilgehäuse (12), das einen Einlass (14a), einen Auslass (14b), eine Kammer (16) und einen Strömungsweg von dem Einlass (14a) zu dem Auslass (14b) durch die Kammer (16) definiert; und
ein Schließelement (18) und einen Ventilsitz (22), die in der Kammer (16) angeordnet sind, wobei das Schließelement (18) in Bezug auf den Ventilsitz (22) zwischen einer offenen und einer geschlossenen Position für eine Strömung durch den Strömungsweg über einen Hubweg beweglich ist, und
wobei sich das Schließelement (18) standardmäßig in der offenen Position befindet,
wobei das Schließelement (18) ein Kopfende (18b) und ein Schaftende (18a) aufweist, wobei das Schließelement (18) eine Stopfbuchse (18c) aufweist, die in Umfangsrichtung nahe dem Schaftende (18a) angeordnet ist,
**dadurch gekennzeichnet, dass**:
das Druckminderventil eine rutschfeste Dichtung (50) umfasst, die zwischen der Stopfbuchse (18c) und dem Ventilgehäuse (12) in der Kammer (16) angeordnet ist, wobei die rutschfeste Dichtung (50) das Schließelement (18) gegen das Ventilgehäuse (12) in der Kammer (16) abdichtet, wobei die rutschfeste Dichtung (50) bei einer Bewegung des Schließelements (18) über den Hubweg eine elastische Verformung erfährt, wobei die elastische Verformung elastische potenzielle Energie bereitstellt, die wirkt, um das Schließelement (18) gegen die Bewegung vorzuspannen; und dadurch, dass
das Schließelement (18) einen Kopf (18b) mit einem Durchmesser D aufweist, und ein Verhältnis des Durchmessers D zu dem Hubweg 625:1 bis 200:1 ist.

2. Druckminderventil (10) nach Anspruch 1, wobei das Schließelement (18) druckbetätigt ist.

3. Druckminderventil (10) nach Anspruch 1 oder 2, wobei die rutschfeste Dichtung (50) ein elastomerer O-Ring ist.

4. Druckminderventil (10) nach einem vorstehenden Anspruch, wobei der Hubweg ein bis drei Mils, d. h. Tausendstel eines Zolls, beträgt, was 25,4 Mikrometern bis 76,2 Mikrometern entspricht.

5. Druckminderventil (10) nach einem vorstehenden Anspruch, weiter umfassend:
eine erste Feder (24) und eine entgegengesetzt wirkende zweite Feder (26), wobei die erste Feder (24) das Schließelement (18) gegen die zweite Feder (26) standardmäßig in die offene Position vorspannt;
einen Kolben (38) benachbart zu der ersten Feder (24), wobei die erste Feder (24) auf den Kolben (38) wirkt, um das Schließelement (18) zu bewegen, wobei der Kolben (38) einen Druckraum (38a) definiert; und
einen Druckabgriff (48), der den Auslass (14b) mit dem Druckraum (38a) verbindet, wobei Druck in dem Auslass (14b) dem Kolben (38) durch den Druckabgriff (48) als Rückkopplung dient, wobei der Druck auf den Kolben (38) gegen die erste Feder (24) wirkt, um dadurch die Bewegung des Schließelements (18) zu regeln,
wobei der Kopf (18b) in der geschlossenen Position gegen den Ventilsitz (22) anliegt.

6. Druckminderventil (10) nach Anspruch 5, wobei ein Kammerdurchmesser der Kammer (16) an der rutschfesten Dichtung (50) größer als der Kopfdurchmesser D ist.

7. Druckminderventil (10) nach Anspruch 5 oder 6, wobei die erste Feder (24) eine Tellerfeder (24) ist und die zweite Feder (26) eine Schraubenfeder (26) ist.

8. Druckminderventil (10) nach einem der Ansprüche 5 bis 7, wobei die rutschfeste Dichtung (50) entlang des Ventilgehäuses (12) in der Kammer (16) über den Hubweg rutschfest ist, wodurch sprunghafte Druckschwankungen aufgrund von Rutschen vermieden werden.

9. Druckminderventil (10) nach einem der Ansprüche 5 bis 8, weiter umfassend eine zusätzliche rutschfeste Dichtung (50) an dem Kolben (38).

## Revendications

1. Vanne de réduction de pression (10) comprenant :
un corps de vanne (12) définissant une entrée (14a), une sortie (14b), une chambre (16), et un trajet d'écoulement depuis l'entrée (14a) jusqu'à la sortie (14b) à travers la chambre (16) ; et
un clapet (18) et un siège de vanne (22) disposés dans la chambre (16), le clapet (18) étant déplaçable sur une distance de course par rapport au siège de vanne (22) entre des positions ouverte et fermée pour un écoulement à travers le trajet d'écoulement, et
le clapet (18) étant dans la position ouverte par défaut,
dans laquelle le clapet (18) présente une extrémité de tête (18b) et une extrémité de tige (18a), dans laquelle le clapet (18) présente un presse-étoupe (18c) disposé circonférentiellement près de l'extrémité de tige (18a),
**caractérisée en ce que** :
la vanne de réduction de pression comprend un joint non glissant (50) disposé entre le presse-étoupe (18c) et le corps de vanne (12) dans la chambre (16), le joint non glissant (50) assurant l'étanchéité du clapet (18) contre le corps de vanne (12) dans la chambre (16), le joint non glissant (50) subissant une déformation élastique lors d'un mouvement du clapet (18) sur la distance de course, la déformation élastique fournissant une énergie potentielle élastique qui agit pour solliciter le clapet (18) à l'encontre du mouvement ; et **en ce que**
le clapet (18) présente une tête (18b) avec un diamètre D, et un rapport du diamètre D sur la distance de course est de 625:1 à 200:1.

2. Vanne de réduction de pression (10) selon la revendication 1, dans laquelle le clapet (18) est actionné par la pression.

3. Vanne de réduction de pression (10) selon la revendication 1 ou la revendication 2, dans laquelle le joint non glissant (50) est un joint torique en élastomère.

4. Vanne de réduction de pression (10) selon toute revendication précédente, dans laquelle la distance de course est de un à trois mils, c'est-à-dire millièmes de pouce, ce qui correspond à 25,4 micromètres à 76,2 micromètres.

5. Vanne de réduction de pression (10) selon toute revendication précédente, comprenant en outre :
un premier ressort (24) et un deuxième ressort (26) opposé, le premier ressort (24) sollicitant le clapet (18) contre le deuxième ressort (26) vers la position ouverte par défaut ;
un piston (38) adjacent au premier ressort (24), le premier ressort (24) agissant sur le piston (38) pour déplacer le clapet (18), le piston (38) définissant une chambre de distribution (38a) ; et
une prise de pression (48) reliant la sortie (14b) à la chambre de distribution (38a), dans laquelle la pression dans la sortie (14b) sert de rétroaction au piston (38) à travers la prise de pression (48), la pression agissant sur le piston (38) contre le premier ressort (24) afin de réguler ainsi le mouvement du clapet (18),
dans laquelle la tête (18b) vient en appui contre le siège de vanne (22) lorsqu'il est dans la position fermée.

6. Vanne de réduction de pression (10) selon la revendication 5, dans laquelle un diamètre de chambre de la chambre (16) au niveau du joint non glissant (50) est supérieur au diamètre de tête D.

7. Vanne de réduction de pression (10) selon la revendication 5 ou la revendication 6, dans laquelle le premier ressort (24) est un ressort Belleville (24) et le deuxième ressort (26) est un ressort hélicoïdal (26).

8. Vanne de réduction de pression (10) selon l'une quelconque des revendications 5 à 7, dans laquelle le joint non glissant (50) est non glissant le long du corps de vanne (12) dans la chambre (16) sur la distance de course, évitant ainsi des variations brusques de pression dues au glissement.

9. Vanne de réduction de pression (10) selon l'une quelconque des revendications 5 à 8, comprenant en outre un joint non glissant (50) supplémentaire sur le piston (38).
